# EUROPEAN PATENT SPECIFICATION

(11) **EP 3 961 022 B1**
(45) Date of publication and mention of the grant of the patent: **30.11.2022**
(21) Application number: 21190855.3
(22) Date of filing: 11.08.2021
(51) Int. Cl.: F02F 1/42, F01L 3/06

(54) **INTERNAL COMBUSTION ENGINE**
BRENNKRAFTMASCHINE
MOTEUR À COMBUSTION INTERNE

(30) Priority: 28.08.2020 JP 2020144841
(43) Date of publication of application: 02.03.2022
(73) Proprietor: Suzuki Motor Corporation, Shizuoka 432-8611 (JP)
(72) Inventor: TANAKA, Yusuke, Hamamatsu-shi, 432-8611 (JP)
(74) Representative: Henkel & Partner mbB

(56) References cited:
- FR-A1- 2 922 590
- JP-A- H0 913 977
- US-B2- 6 655 347

## Description

### Technical Field

The present invention generally relates to an internal combustion engine.

### Background Art

There are internal combustion engines engineered to generate tumble flows in the cylinder in order to improve the combustion of fuel. Japanese Patent First Publication No. 2018-141433 discloses such a type of internal combustion engine which has an edge formed in the shape of a line on a downstream end of an intake port floor near an intake opening exposed to a combustion chamber for departing a flow of intake air from an inner wall of the intake port. The edge works to orient the flow of intake air, as departing from the inner wall of the intake port, to where tumbles flows are generated, thereby minimizing a risk that tumble flows may be generated in the reverse direction and also enhancing the tumble flows in the forward direction.

### Summary of Invention

### Technical Problem

The above described engine has the line-shaped edge extending continuously over a wide region, thereby causing most of the flow of intake air departing from the edge to advance straight in a direction in which the intake port extends without spreading over a circumference of an edge of the intake opening. This causes an effective sectional area of a flow path of the intake port downstream of the edge to be smaller than an area of the intake opening, which leads to a reduction in amount of intake air delivered into the combustion chamber.

### SUMMARY OF THE INVENTION

The invention was made in view of the above problems. It is an object of the invention to provide an internal combustion engine designed to ensure the stability in creating a tumble flow of intake air in a combustion chamber and enhance the efficiency in delivering the intake air into the combustion chamber.

According to one aspect of the invention, there is provided an internal combustion engine which comprises: (a) a cylinder head which includes an intake opening which is exposed to a combustion chamber and an intake port which extends toward the intake opening and communicates with the intake opening; (b) an intake valve which works to open or close the intake opening; and (c) a circular valve seat which has a valve resting surface on which the intake valve rests and is fit in the intake opening. The intake port has a downstream intake port surface defined by a surface of a wall of a downstream end of the intake port close to the combustion chamber. The valve seat includes a port connection surface and an edge. The port connection surface connects between the downstream intake port surface and the valve resting surface and intersects with the downstream intake port surface. The edge defines a line-shaped sharp corner on an intersection between the downstream intake port surface and the port connection surface. A plurality of recesses are arranged adjacent each other in a circumferential direction of the intake port. The recesses extend in a direction in which the intake port extends and are hollowed in the downstream intake port surface and the port connection surface to increase a transverse sectional area of the intake opening.

### BENEFICIAL ADVANTAGES OF THE INVENTION

According to the above invention, it is possible to ensure the stability in creating a tumble flow of intake air in a combustion chamber and improve the efficiency in delivering the intake air into the combustion chamber.

### BRIEF DESCRIPTION OF THE DRAWINGS

Fig. 1 is a sectional view, as taken along the line *I-I* in Fig. 2, which illustrates a cross section of a cylinder head of an internal combustion engine according to an embodiment of the invention.
Fig. 2 is a sectional view, as taken along the line *II-II* in Fig. 2, which illustrates the internal combustion engine in Fig. 1.
Fig. 3 is an enlarged view which illustrates a region around an intake valve of the internal combustion engine in Fig. 2.
Fig. 4 is a sectional view, as taken along the line *IV-IV* in Fig. 3, which illustrates the internal combustion engine in Fig. 3.
Fig. 5 is a sectional view, as taken along the line *V-V* in Fig. 3, which illustrates the internal combustion engine in Fig. 3.

### FREFERRED MODE FOR CARRYING OUT THE INVENTION

An internal combustion engine according to an embodiment of the invention comprises: (a) a cylinder head which includes an intake opening which is exposed to a combustion chamber and an intake port which extends toward the intake opening and communicates with the intake opening; (b) an intake valve which works to open or close the intake opening; and (c) a circular valve seat which has a valve resting surface on which the intake valve rests and is fit in the intake opening. The intake port has a downstream intake port surface defined by a surface of a wall of a downstream end of the intake port close to the combustion chamber. The valve seat includes a port connection surface and an edge. The port connection surface connects between the downstream intake port surface and the valve resting surface and intersects with the downstream intake port surface. The edge defines a line-shaped sharp corner on an intersection between the downstream intake port surface and the port connection surface. A plurality of recesses are arranged adjacent each other in a circumferential direction of the intake port. The recesses extend in a direction in which the intake port extends and are hollowed in the downstream intake port surface and the port connection surface to increase a transverse sectional area of the intake opening. The internal combustion engine, therefore, works to ensure the stability in creating a tumble flow of intake air in the combustion chamber and enhance the efficiency in delivering the intake air into the combustion chamber.

### EMBODIMENT

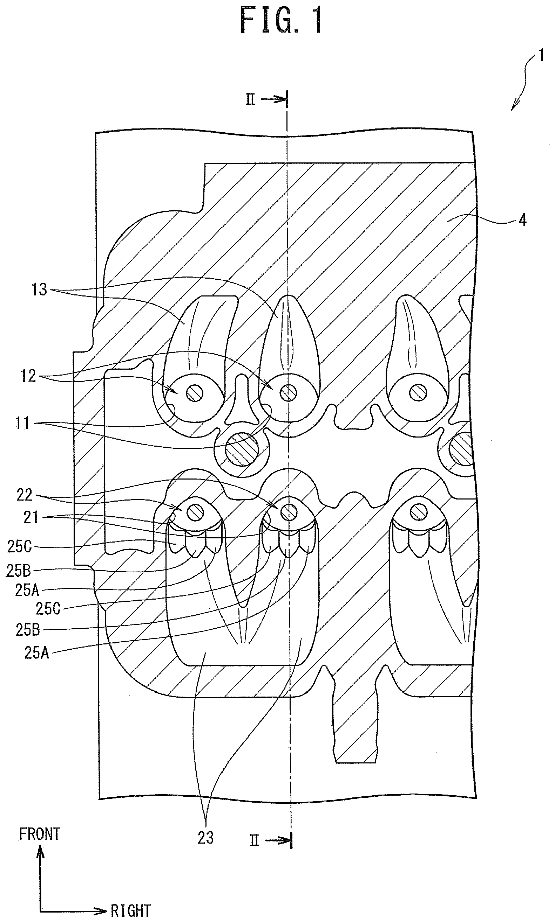

An internal combustion engine according to an embodiment of the invention will be described below with reference to the drawings. In Figs. 1 to 5, a vertical, a longitudinal, and a lateral direction correspond to a vertical, a longitudinal, and a lateral direction of the internal combustion engine mounted in a vehicle. The lateral direction is perpendicular to the longitudinal direction of the vehicle. A height direction of the internal combustion engine agrees with the vertical direction.

Fig. 1 to 5 are views which illustrates the internal combustion engine according to the embodiment of the invention.

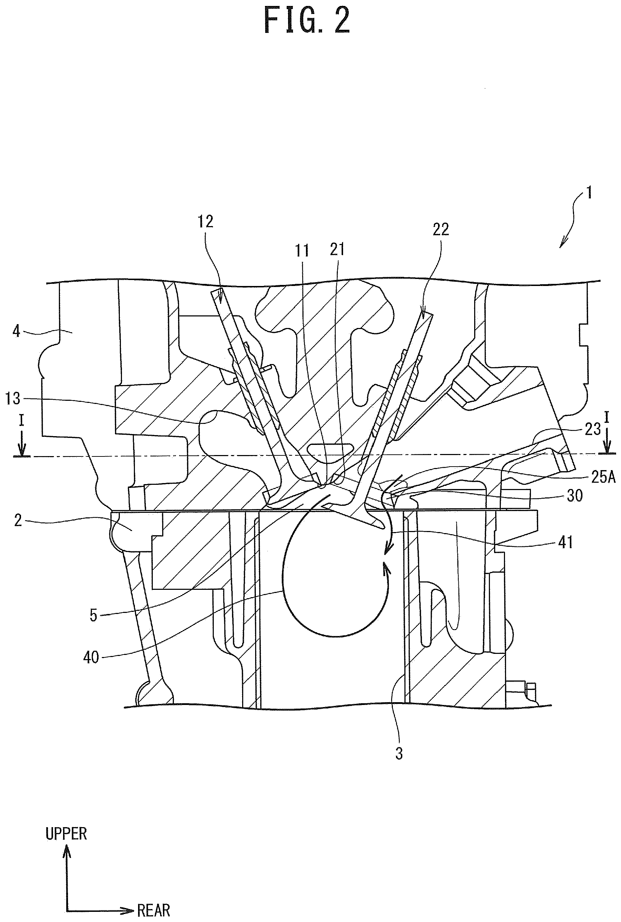

The structure will first be described. In Figs. 1 and 2, the internal combustion engine 1 includes the cylinder block 2 in which the cylinders 3 are formed and the cylinder head 4 which defines the combustion chambers 5 therein. The cylinder head 4 is joined to an upper portion of the cylinder block 2. The internal combustion engine 1 is designed as a multi-cylinder engine equipped with the plurality of cylinders 3 formed in the cylinder block 2. The internal combustion engine 1 works to achieve combustion of fuel and air (which will also be referred to below as intake air) sucked from the outside within each of the combustion chambers 5 to produce kinetic energy.

The cylinder head 4 has formed therein two intake openings 21 exposed to each of the combustion chamber 5 and two exhaust openings 11 exposed to each of the combustion chamber 5. The cylinder head 4 has installed therein two intake valves 22 and two exhaust valves 12 for each of the cylinders 3. The intake openings 21 open or close the intake openings 21. The exhaust valves 12 open or close the exhaust openings 11. The intake valves 22 and the exhaust valves 12 are moved simultaneously with rotation of a crankshaft (not shown). Each of the intake valves 22 includes the umbrella-shaped valve head 22A which opens or closes a corresponding one of the intake openings 21 and the valve stem 22B which is of the shape of a shaft and supports the valve head 22A.

The cylinder head 4 has formed therein two intake ports 23 and two exhaust ports 23 for each of the cylinders 3. The intake ports 23 supply the intake air to a corresponding one of the combustion chambers 5 through the intake openings 21. The exhaust ports 13 discharge exhaust gas from a corresponding one of the combustion chambers 5 through the exhaust openings 11. The intake ports 23 leads to a single upstream intake path. Specifically, the upstream intake path extends frontward to the intake opening 21 and is branched into the two intake ports 23 within the cylinder head 4 communicating with the intake openings 21. The exhaust ports 13 extend backward to an exhaust outlet, not shown, and are converged into one exhaust path communicating with the exhaust outlet.

In this embodiment, the intake ports 23 extend toward an inner peripheral surface of the cylinder 3 facing the intake openings 21. This causes, when the intake valves 22 are opened, the intake air, as delivered from the intake ports 23 into the combustion chamber 5, to collide with the inner peripheral surface of the cylinder 3 facing the intake openings 21 and an upper surface of a piston, not shown, thereby creating the tumble flow 40 which, as illustrated in Fig. 2, circulates vertically within the cylinder 3.

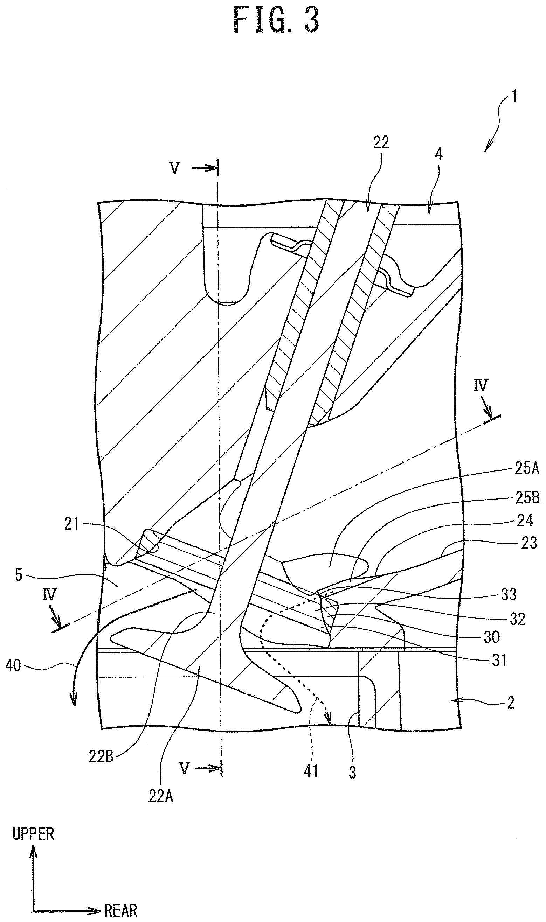

The internal combustion engine 1 is, as illustrated in Fig. 3, equipped with the circular valve seats 30. The valve seats 30 are fit in the intake openings 21. Specifically, the valve seats 30 are mounted on inner walls of the intake openings 21. Each of the valve seats 30 has the valve resting surface 31 on which the intake valve 22 rests.

Each of the intake ports 23 has the downstream intake port surface 24. The downstream intake port surface 24 is defined by a surface of a wall of a downstream end of the intake port 23 near the combustion chamber 5, in other words, a lower surface of the intake ports 23.

Each of the valve seats 30 includes the port connection surface 32 and the edge 33. The port connection surface 32 communicates between the downstream intake port surface 24 and the valve resting surface 31 and is oriented to intersect with the downstream intake port surface 24. The edge 33 defines a line-shaped sharp corner on the intersection between the downstream intake port surface 24 and the port connection surface 32.

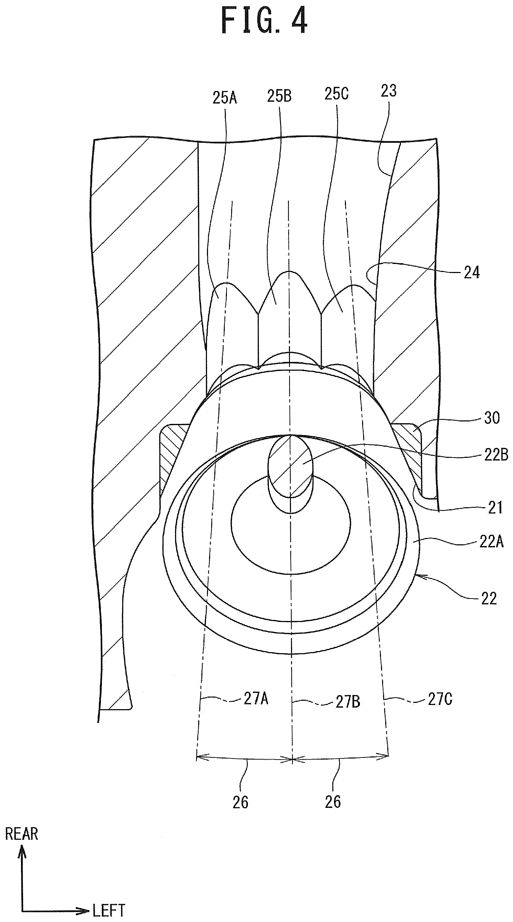

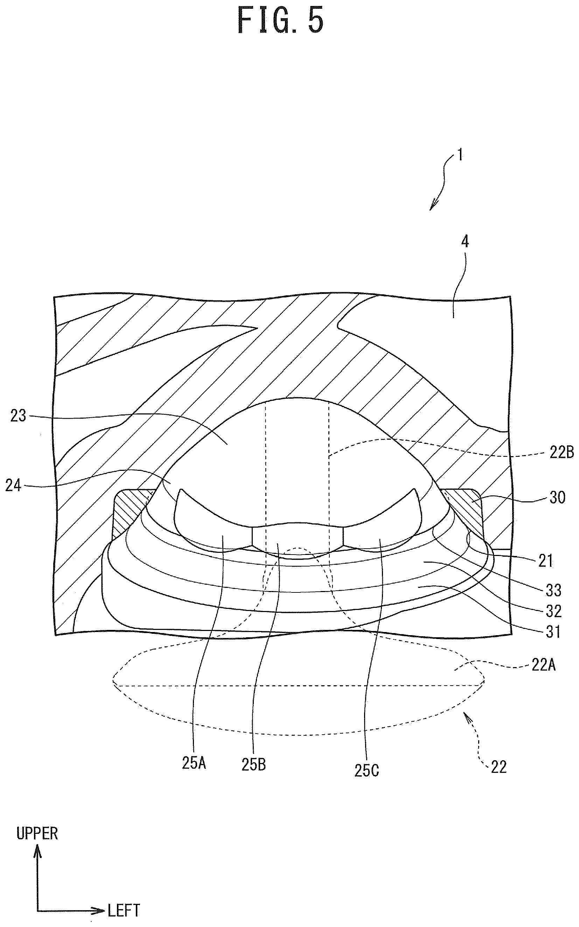

Each of the intake ports 23 of the cylinder head 4, as illustrated in Figs. 4 and 5, has a plurality of (three in this embodiment) recesses 25A, 25B, and 25C formed in the wall thereof. The recesses 25A, 25B, and 25C extend in a direction in which the intake port 23 extends. The recesses 25A, 25B, and 25C are each formed to have a depth so as to widen the downstream intake port surface 24 and the port connection surface 32. Specifically, each of the recesses 25A, 25B, and 25C is hollowed both in the downstream intake port surface 24 and in the port connection surface 32 to increase a transverse sectional area of the intake port 23 toward the intake opening 21. The recesses 25A, 25B, and 25C are arranged adjacent each other in a circumferential direction of the intake port 23. Each of the recesses 25A, 25B, and 25C is shaped to conform with a portion of an outer peripheral surface of a cylinder and may be formed using cutting techniques. In this embodiment, the recesses 25A, 25B, and 25C are arranged in direct abutment or contact with each other in the circumferential direction, but however, may alternatively be located away from each other in the circumferential direction of the intake port 23.

The recess 25B that lies at the middle of the recesses 25A, 25B, and 25C in the circumferential direction of the intake port 23 is, as clearly illustrated in Fig. 4, located to face the valve stem 23B of the intake valve 22 in the direction in which the intake port 23 extends. This causes the flow of intake air moving along the recess 25B to collide with the valve stem 22B of the intake valve 22 so that it is oriented downward and then delivered into the combustion chamber 5.

The recesses 25A and 25C located on outer opposite sides of the recess 25B are located not to face the valve stem 22B of the intake valve 22 in the direction in which the intake port 23 extends. In other words, at least one of the recesses 25A, 25B, and 25C is oriented out of alignment with the valve stem 22B of the intake valve 22 in the direction in which the intake port 23 extends. To say it in a different way, as the intake port 23 is viewed through the intake opening 21 from the center axis of the cylinder 3, the recesses 25A and 25C are located not to overlap with the valve stem 22B of the intake valve 22 in a direction in which the intake air flows in the intake port 23. This causes the intake air flowing along each of the recesses 25A and 25C to move on an upper surface of the valve head 22A of the intake valve 22 without colliding with the valve stem 22B of the intake valve 22, so that it becomes the tumble flow 40 in the forward direction and enters the combustion chamber 5.

As apparent from the above discussion, the recess 25B which is located on the middle of the array of the recesses 25A, 25B, and 25C in the circumferential direction of the intake port 23 extends to the valve stem 22B of the intake valve 22 in the direction in which the intake port 23 extends. Each of the recesses 25A and 25C which is located outside the recess 25B in the circumferential direction of the intake port 23 extends at an inclined angle to the direction in which the intake port 23 extends so that it departs from the valve stem 22B of the intake valve 22 in the circumferential direction of the intake port 23 as approaching the intake valve 22 in the direction in which the intake port 23 extends. More specifically, the recess 25A is inclined, i.e., extends along a line which passes by the valve stem 22B, in other words, extends away to the left from the valve stem 22B in the circumferential direction of the intake port 23, as viewed in Fig. 4. The recess 25C is inclined, i.e., extends along a line which passes by the valve stem 22B, in other words, extends away to the right from the valve stem 22B in the circumferential direction of the intake port 23, as viewed in Fig. 4. The directions 27A and 27C in which the outer recesses 25A and 25C extend are, therefore, each inclined at a given angle 26 to the direction 27B in which the center recess 25B extends. To say it in a different way, at least one of the recesses 25A, 25B, and 25C is inclined to the direction in which the intake port 23 extends so that it extends out of alignment with the valve stem 22B of the intake valve 22, in other words, it is oriented along a line which is offset in the circumferential direction of the intake port 23 from a line passing through the axial center of the valve stem 22B in the direction in which the intake port 23 extends (i.e., the direction 27B).

Beneficial advantages offered by this embodiment will be described below. The intake air, as sucked from outside the internal combustion engine 1 into the intake port 23 during the intake stroke in the internal combustion engine 1, passes through the intake opening 21 and then enters the combustion chamber 5. The intake air then impacts the inner peripheral surface of the cylinder 3 and the upper surface of the piston (not shown), thereby creating the tumble flow 40 which circulates vertically within the cylinder 3.

In the internal combustion engine 1 in this embodiment, each of the valve seats 30 communicates between the downstream intake port surface 24 and the valve resting surface 31 and also has the port connection surface 32 which intersects the downstream intake port surface 24. Each of the valve seats 30 has the edge 33 which defines a line-shaped sharp corner lying at the intersection between the downstream intake port surface 24 and the port connection surface 32.

Therefore, the intake air flowing on the downstream intake port surface 24 is departed at the edge 33 and then advances in the direction in which the intake port 23 extends to produce an air flow which will enter the combustion chamber 5 and create the tumble flow 40 oriented in the forward direction. This ensures the stability in generating the tumble flow 40 using the intake air within the combustion chamber 5.

The internal combustion engine 1 in this embodiment also includes the recesses 25A, 25B, and 25C each of which has a length extending in the direction in which the intake port 23 extends and is hollowed in the downstream intake port surface 24 and the port connection surface 32 to increase a transverse sectional area of the intake opening 21. The recesses 25A, 25B, and 25C are arranged adjacent each other in the circumferential direction of the intake port 23.

Therefore, the edge 33 is lowered in height or level in each of the recesses 25A, 25B, and 25C from the levels of the downstream intake port surface 24 and the port connection surface 32, thereby increasing an area of a portion of the intake opening 21 communicating with the downstream intake port surface 24. This results in an increase in amount of air inducted into the combustion chamber 5 to enhance the efficiency in delivering the air into the combustion chamber 5.

The plurality of recesses 25A, 25B, and 25C are arranged adjacent each other in the circumferential direction of each of the intake ports 23, thereby also increasing the area of the portion of the intake opening 21 communicating with the downstream intake port surface 24. This also increase the amount of air delivered into the combustion chamber 5 and improves the efficiency in supplying the air into the combustion chamber 5.

The edge 33 has portions where the recesses 25A, 25B, and 25C exist. Each of such portions has a sharp corner lowered in level from the rest of the edge 33. In other words, after the recesses 25A, 25B, and 25C are formed, the edge 33 still has the sharp lower portions and thus works to minimize a risk that the tumble flow 41 which is oriented in the reverse direction may be generated, thereby ensuring the stability in creating the tumble flow 40 circulating in the forward direction.

The above arrangements ensure the stability in keeping the tumble flow 40 of the intake air within the combustion chamber 5, thereby improving the efficiency in delivery of the intake air into the combustion chamber 5.

In the internal combustion engine 1 in this embodiment, at least one of the recesses 25A, 25B, and 25C, i.e., the recess 25A or 25B is arranged out of alignment with the valve stem 22B of the intake valve 22 in the direction in which the intake port 23 extends.

The above layout in which the recess 25A and/or 25C are arranged not to face the valve stem 22B of the intake valve 22 in the direction in which the intake port 23 extends causes the intake air guided by the recess 25A or 25C to flow along the upper surface of the valve head 22A of the intake valve 22 without colliding with the valve stem 22B and then become the tumble flow 40 in the forward direction entering the combustion chamber 5. This eliminates a risk that the tumble flow 41 in the reverse direction may be generated by the collision of the intake air with the valve stem 22B of the intake valve 22, thereby ensuring the stability in creating the tumble flow 40 in the forward direction and resulting in an increased amount of intake air delivered into the combustion chamber 5 to enhance the efficiency in supplying the intake air into the combustion chamber 5.

In the internal combustion engine 1 in this embodiment, at least one of the recesses 25A, 25B, and 25C, i.e., the recess 25A or 25B is oriented to have the longitudinal center line which is inclined at a given angle (excluding zero) to the longitudinal center line of the recess 25B extending through the axial center of the valve stem 22B. In other words, the longitudinal center line of at least one of the recesses 25A and 25B is inclined relative to the direction in which the intake port 23 extends and arranged away from the valve stem 22B in the radial direction of the intake port 23 (i.e., the intake valve 22).

The above layout causes the intake air guided by at least one of the recesses 25A and 25C to bypass the valve stem 22B of the intake valve 22, thereby eliminating a risk that the intake air may collide with the valve stem 22B of the intake valve 22, so that it may be turned downward to create the tumble flow 41 in the reverse direction. This ensures the stability in creating the tumble flow 40 in the forward direction to increase the amount of intake air delivered into the combustion chamber 5, thereby enhancing the efficiency in supplying the intake air to the combustion chamber 5.

## Claims

1. An internal combustion engine comprising:
a cylinder head (4) which includes an intake opening (21) which is exposed to a combustion chamber (5) and an intake port (23) which extends toward the intake opening and communicates with the intake opening;
an intake valve (22) which works to open or close the intake opening; and
a circular valve seat (30) which has a valve resting surface (31) on which the intake valve rests and is fit in the intake opening,
the intake port has a downstream intake port surface (24) defined by a surface of a wall of a downstream end of the intake port close to the combustion chamber,
the valve seat includes a port connection surface (32) and an edge (33), the port connection surface connecting between the downstream intake port surface and the valve resting surface and intersects with the downstream intake port surface, the edge defining a line-shaped sharp corner on an intersection between the downstream intake port surface and the port connection surface,
**characterised in that**
a plurality of recesses (25A, 25B, 25C) are arranged adjacent each other in a circumferential direction of the intake port, the recesses extending in a direction in which the intake port extends and being hollowed in the downstream intake port surface and the port connection surface to increase a transverse sectional area of the intake opening.

2. The internal combustion engine as claimed in claim 1, wherein at least one of the recesses is arranged out of alignment with a stem (22B) of the intake valve in a direction in which the intake port extends.

3. The internal combustion engine as claimed in claim 1 or 2, wherein at least one of the recesses is inclined at an angle to a direction in which the intake port extends so that it departs from a stem (22B) of the intake valve in the circumferential direction of the intake port as approaching the intake valve in the direction in which the intake port extends.

## Patentansprüche

1. Eine Verbrennungskraftmaschine mit:
einen Zylinderkopf (4), der eine Ansaugöffnung (21), die zu einer Verbrennungskammer (5) offen ist, und einen Ansauganschluss (23), der sich zu der Ansaugöffnung erstreckt und mit der Ansaugöffnung in Verbindung steht, aufweist,
einem Einlassventil (22), das zum Öffnen oder Schließen der Ansaugöffnung dient, und
einem kreisförmigen Ventilsitz (30), der eine Ventilauflageoberfläche (31) aufweist, auf der das Einlassventil aufliegt und in die Ansaugöffnung eingesetzt ist,
wobei der Ansauganschluss eine stromabwärtige Ansauganschlussoberfläche (24) aufweist, die durch eine Oberfläche einer Wand eines stromabwärtigen Endes des Ansauganschlusses nahe der Verbrennungskammer definiert ist,
der Ventilsitz eine Anschlussverbindungsoberfläche (32) und eine Kante (33) aufweist, wobei die Anschlussverbindungsoberfläche eine Verbindung zwischen der stromabwärtigen Ansauganschlussoberfläche und der Ventilauflageoberfläche herstellt und sich mit der stromabwärtigen Ansauganschlussoberfläche schneidet, wobei die Kante eine linienförmige scharfe Ecke an einem Übergang zwischen der stromabwärtigen Ansauganschlussoberfläche und der Anschlussverbindungsoberfläche definiert,
**dadurch gekennzeichnet, dass**
eine Vielzahl von Ausnehmungen (25A,25B,25C) in einer Umfangsrichtung des Ansauganschlusses nebeneinander angeordnet sind, wobei sich die Ausnehmungen in einer Richtung erstrecken, in der sich der Ansauganschluss erstreckt, und in der stromabwärtigen Ansauganschlussoberfläche und der Anschlussverbindungsoberfläche ausgehöhlt sind, um eine Querschnittsfläche der Ansaugöffnung zu vergrößern.

2. Die Verbrennungskraftmaschine nach Anspruch 1, wobei mindestens eine der Ausnehmungen in einer Richtung, in der sich der Ansauganschluss erstreckt, nicht mit einem Schaft (22B) des Einlassventils ausgerichtet ist.

3. Die Verbrennungskraftmaschine nach Anspruch 1 oder 2, wobei mindestens eine der Ausnehmungen in einem Winkel zu einer Richtung, in der sich der Ansauganschluss erstreckt, geneigt ist, so dass sie von einem Schaft (22B) des Einlassventils in der Umfangsrichtung des Ansauganschlusses abweicht, wenn sie sich dem Einlassventil in der Richtung nähert, in der sich der Ansauganschluss erstreckt.

## Revendications

1. Moteur à combustion interne comprenant :
une culasse (4) de cylindre, qui comprend une ouverture (21) d'admission, qui est exposée à une chambre (5) de combustion, et un orifice (23) d'admission, qui s'étend vers l'ouverture d'admission et qui communique avec l'ouverture d'admission ;
une soupape (22) d'admission, qui travaille pour ouvrir ou fermer l'ouverture d'admission ; et
un siège (30) circulaire de soupape, qui a une surface (31) de repos de la soupape, sur laquelle la soupape d'admission repose et est adaptée dans l'ouverture d'admission,
l'orifice d'admission a une surface (24) en aval d'orifice d'admission définie par une surface d'une paroi d'une extrémité en aval de l'orifice d'admission près de la chambre de combustion,
le siège de soupape comprend une surface (32) de liaison d'orifice et un bord (33), la surface de liaison d'orifice reliant la surface d'orifice d'admission en aval et la surface de repos de la soupape et étant en intersection avec la surface d'orifice d'admission en aval, le bord définissant un coin aigu en forme de ligne sur une intersection entre la surface d'orifice d'admission en aval et la surface de liaison de l'orifice,
**caractérisé en ce que**
une pluralité de chambrages (25A, 25B, 25C) sont disposés en étant voisins les uns des autres dans une direction circonférentielle de l'orifice d'admission, les chambrages s'étendant dans une direction dans laquelle l'orifice d'admission s'étend et étant creusés dans la surface de l'orifice d'admission en aval et dans la surface de liaison de l'orifice pour augmenter une surface de section transversale de l'ouverture d'admission.

2. Moteur à combustion interne suivant la revendication 1, dans lequel au moins l'un des chambrages n'est pas aligné avec une tige (22B) de la soupape d'admission dans une direction dans laquelle l'orifice d'admission s'étend.

3. Moteur à combustion interne suivant la revendication 1 ou 2, dans lequel au moins l'un des chambrages est incliné en faisant un angle avec une direction dans laquelle l'orifice d'admission s'étend, de manière à s'écarter d'une tige (22B) de la soupape d'admission dans la direction circonférentielle de l'orifice d'admission au fur et à mesure qu'il se rapproche de la soupape d'admission dans la direction dans laquelle l'orifice d'admission s'étend.
